# DEMANDE DE BREVET EUROPEEN

(11) **EP 1 288 049 A1**
(43) Date de publication de la demande: **05.03.2003**
(21) Numéro de dépôt: 02292041.7
(22) Date de dépôt: 14.08.2002
(51) Int. Cl.: B60J 10/08, B60J 10/00

(54) **Joint double d'étanchéité destiné à équiper un ouvrant, notamment une porte de véhicule automobile, et son procédé de fabrication**

(30) Priorité: 30.08.2001 FR 0111264
(71) Demandeur: Metzeler Automotive Profile Systems Transieres S.A., 92000 Nanterre (FR)
(72) Inventeur: Dron, Bernard, 92800 Puteaux (FR)
(74) Mandataire: Jolly, Jean-Pierre

(57) **Abrégé**

Ce joint double d'étanchéité comprend deux joints élémentaires (2, 3), attenants latéralement suivant une partie de leur longueur et comportant chacun une partie de fixation sur l'ouvrant et une partie d'étanchéité, ces deux joints élémentaires (2, 3) ayant des longueurs différentes adaptées aux trajets fermés qu'ils sont respectivement destinés à occuper sur l'ouvrant et à leurs fonctions respectives d'étanchéité.

## Description

L'invention concerne un joint double d'étanchéité destiné à équiper un ouvrant, notamment une porte de véhicule automobile. L'invention concerne également un procédé de fabrication d'un tel joint.

L'étanchéité des portes de véhicules automobiles est généralement assurée par deux joints distincts :
- un joint dit "primaire", qui est disposé à la périphérie de la porte, ce primaire étant fixé sur la porte, ou sur le caisson de porte, ou encore faisant partie intégrante du joint de vitre coulissante dit "coulisse" ;
- un joint secondaire fixé sur la porte, à une certaine distance de la périphérie de celle-ci, ou, plus généralement en Europe, sur l'encadrement de porte, où il assure l'essentiel de l'étanchéité.

Quelle que soit la réalisation pratique adoptée, il est nécessaire de prévoir deux joints distincts et, par conséquent, deux opérations distinctes de fabrication, deux pièces à livrer par le fabricant aux utilisateurs et deux opérations de montage.

La présente invention vise à proposer un joint double d'étanchéité qui ne présente pas ces inconvénients et qui, dans ce but, comprend deux joints attenants sur une partie de leur longueur, issus tous deux d'une unique opération d'extrusion et qui, après une séparation partielle sur une partie de leur longueur, consécutivement ou postérieurement à l'opération d'extrusion, subissent des opérations distinctes destinées à leur conférer une forme fermée en anneau et à adapter leur longueur à celle du tracé fermé qu'ils doivent épouser sur la porte.

On connaît certes déjà des joints doubles d'étanchéité pour véhicule automobile (voir DE 198 21 076 A), mais ils sont destinés à équiper des encadrements de porte d'automobile, cette porte prenant appui en position de fermeture sur un profilé tubulaire extérieur du joint double, tandis qu'une partie de l'habillage interne de la porte prend appui sur le profilé tubulaire extérieur du joint.

L'invention a pour premier objet un joint double d'étanchéité destiné à équiper un ouvrant, notamment une porte de véhicule automobile, caractérisé en ce qu'il comprend deux joints élémentaires attenants latéralement suivant une partie de leur longueur et comportant chacun une partie de fixation sur l'ouvrant et une partie d'étanchéité, ces deux joints élémentaires ayant des longueurs différentes adaptées aux trajets fermés qu'ils sont respectivement destinés à occuper sur l'ouvrant et à leurs fonctions respectives d'étanchéité.

Les extrémités de chacun des joints après montage sur l'ouvrant sont contiguës et peuvent pour l'un et/ou l'autre joint être préalablement solidarisées entre elles.

Le joint élémentaire de plus petite longueur, assurant l'étanchéité secondaire de l'ouvrant, est venu d'extrusion avec le joint de plus grande longueur et peut avoir ses deux extrémités réunies simplement par collage ou, éventuellement, par moulage, de manière à présenter un profil continu fermé en anneau.

Le joint de plus grande longueur, assurant l'étanchéité primaire de l'ouvrant, comprend avantageusement des tronçons découpés dans le joint venu d'extrusion avec le joint de plus petite longueur et réunis entre eux par des parties moulées, aptes à former avec ces tronçons un anneau généralement fermé présentant la longueur désirée pour le joint, lorsqu'il est en position d'utilisation sur l'ouvrant.

De préférence, dans le cas où l'ouvrant est une porte de véhicule automobile, les partie moulées du joint de plus grande longueur constituent des parties de ce joint destinées à être disposées dans au moins certains angles de la porte, en particulier dans ceux présentant une angulation accusée, et elles ont une forme adaptée au style souhaité pour cette porte.

L'invention a également pour objet un procédé de fabrication du joint double défini ci-dessus, caractérisé en ce que :
- on réalise par une unique opération d'extrusion une ébauche des deux joints élémentaires dans laquelle ceux-ci sont attenants latéralement ;
- consécutivement ou postérieurement à la réalisation de cette ébauche, on sépare les deux joints élémentaires sur une partie de leur longueur ;
- on applique ensuite à chacun des deux joints élémentaires des opérations visant à adapter leur longueur à celle du trajet fermé qu'ils doivent occuper respectivement sur l'ouvrant et éventuellement à fermer l'anneau correspondant à ce trajet fermé.

Le joint élémentaire de plus petite longueur peut, en sortie d'extrusion ou après découpe, avoir sensiblement la longueur désirée et il suffit alors de réunir par collage ou, éventuellement, par moulage ses deux extrémités pour obtenir le profil souhaité, généralement fermé, de la longueur désirée.

Le joint élémentaire issu de la co-extrusion et destiné à constituer le joint de plus grande longueur peut alors être coupé en divers emplacements, les tronçons résultants étant ensuite réunis par des parties moulées de formes et de dimensions telles qu'avec les dits tronçons, elles forment un profil de la longueur désirée, se conformant localement au style souhaité pour l'ouvrant, et généralement en anneau fermé.

L'invention a enfin pour objet un ouvrant, notamment une porte d'un véhicule automobile, équipé d'un joint double du type défini ci-dessus.

D'autres caractéristiques et avantages de l'invention ressortiront de la description détaillée qui va suivre, dans laquelle on se réfèrera aux dessins annexés, sur lesquels :

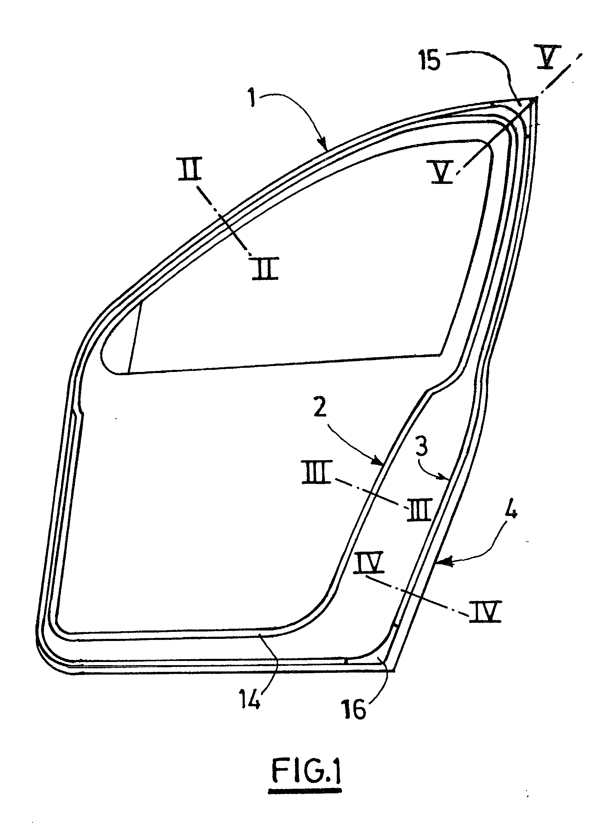

La figure 1 est une vue schématique illustrant le joint double d'étanchéité en position sur une porte d'automobile ;
Les figures 2, 3 et 4, sont des coupes suivant les lignes II-II, III-III et IV-IV de la figure 1 ;
La figure 5 est une coupe partielle suivant la ligne V-V de la figure 1.

Comme on le voit sur les dessins, le joint double 1 conforme à l'invention comprend deux joints élémentaires distincts, 2 et 3, ici à profil fermé en anneau, venus d'extrusion et attenants latéralement de fabrication suivant une partie de leur longueur, cette partie correspondant ici à la portion du joint située au-dessus de la partie supérieure de l'encadrement de vitre de la porte 4 d'automobile équipée du joint double.

Les joints élémentaires 2 et 3 ont des longueurs différentes, adaptées à leur configuration sur la porte 4. Le joint 2, qui assure l'étanchéité secondaire et qui emprunte un trajet non contigu à la périphérie de la porte 4, a une longueur plus faible que celle du joint 3, qui assure l'étanchéité primaire et qui suit de près le contour externe de la porte 4.

Chacun des joints 2 et 3 comporte une partie, respectivement 5 et 6, destinée à être rendue solidaire du cadre de porte et suivant laquelle les deux joints sont attenants sur une partie de leur longueur, et un organe d'étanchéité, respectivement 7 et 8, ici tubulaire, mais qui pourrait aussi bien être une lèvre ou autre, qui est solidaire de la partie 5 ou 6 associée et venu d'extrusion avec elle et qui est destiné à faire saillie en dehors de la structure de la porte.

Comme indiqué ci-dessus, les joints 2 et 3 sont issus d'une unique opération d'extrusion, au cours de laquelle ou après laquelle ils sont séparés l'un de l'autre suivant une partie de leur longueur.

Dans la forme de réalisation illustrée par les dessins, les parties 5 et 6 des joints 2 et 3, qui servent à fixer ceux-ci sur la porte 4, forment, lorsqu'elles sont attenantes, une structure à section transversale en U, dont les ailes sont chacune renforcées par une armature métallique ou en matière plastique, respectivement 9 et 10, et sont logées dans des évidements distincts à section en U, respectivement 11 et 12, de la structure du cadre de porte. En sortie d'extrusion, au moins une zone d'affaiblissement 13 est prévue entre les parties 5 et 6, dans la base du U formée par ces deux parties, afin de pouvoir les séparer aisément.

Après co-extrusion des joints 2 et 3 et séparation de ceux-ci suivant une partie de leur longueur, ils doivent subir des opérations permettant de leur conférer un profil en anneau, fermé ou non, et d'adapter leur longueur à celle de l'emplacement qu'ils occupent lorsqu'ils sont fixés sur la porte 4.

A cet effet, les extrémités du joint secondaire 2, dont la longueur initiale peut être sensiblement équivalente à celle de sa position d'utilisation sur la porte 4, peuvent être réunies en 14 par un simple collage ou éventuellement par moulage.

La mise à longueur du joint primaire 3 est plus complexe, puisque le joint venu d'extrusion est d'abord coupé en tronçons distincts, qui sont ensuite réunis par moulage à leurs extrémités de pièces de raccordement, ici au nombre de deux, respectivement 15 et 16, dont la forme et la longueur sont telles que le joint 3 ainsi adapté ait la longueur désirée et présente le profil généralement fermé qui est le sien en position d'utilisation sur la porte 4. Dans le cas du dessin, les pièces moulées 15 et 16 sont disposées suivant deux angles accusés du cadre de porte et leur forme est choisie telle que la porte équipée du joint présente l'aspect souhaité par le styliste ayant participé à la conception du véhicule.

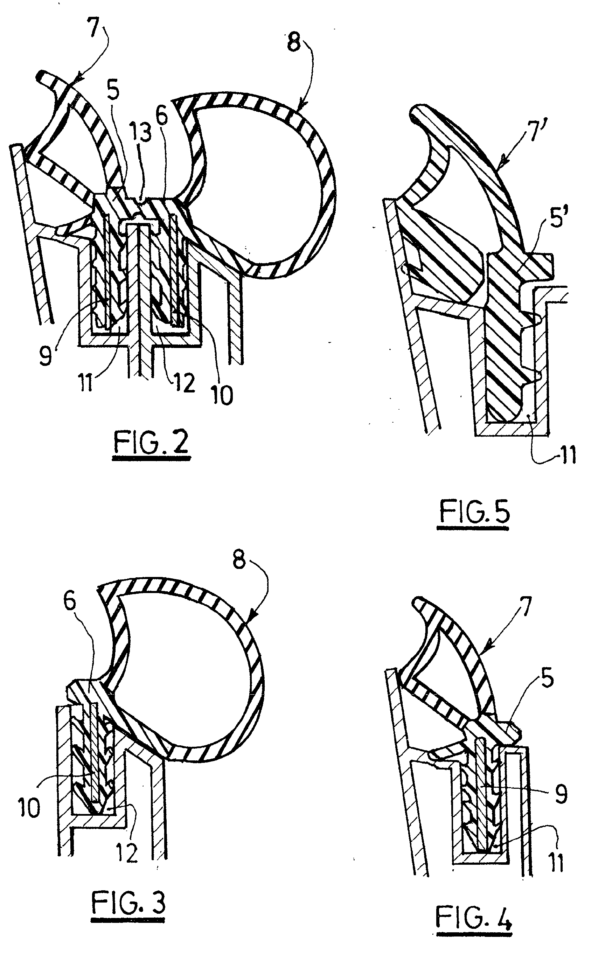

Sur la figure 5 est représentée une coupe transversale d'une telle pièce moulée et l'on y retrouve les composants des parties extrudées, désignés par les mêmes chiffres de référence, affectés de l'indice '.

On notera la grande simplicité du joint double conforme à l'invention, la facilité avec laquelle il peut être réalisé pour un coût modique et sa faculté d'adaptation à des ouvrants de formes et de dimensions très variables.

## Revendications

1. Joint double d'étanchéité destiné à équiper un ouvrant, notamment une porte de véhicule automobile (4), **caractérisé en ce qu'**il comprend deux joints élémentaires (2, 3), attenants latéralement suivant une partie de leur longueur et comportant chacun une partie (5, 6) de fixation sur l'ouvrant et une partie (7, 8) d'étanchéité, ces deux joints élémentaires (2, 3) ayant des longueurs différentes adaptées aux trajets fermés qu'ils sont respectivement destinés à occuper sur l'ouvrant et à leurs fonctions respectives d'étanchéité.

2. Joint double selon la revendication 1, **caractérisé en ce que** le joint élémentaire (2) de plus petite longueur, assurant l'étanchéité secondaire de l'ouvrant, est venu d'extrusion avec le joint de plus grande longueur et a ses deux extrémités réunies par collage ou, éventuellement, par moulage, de manière à présenter un profil continu fermé en anneau.

3. Joint double selon l'une des revendications 1 et 2, **caractérisé en ce que** le joint élémentaire de plus grande longueur, assurant l'étanchéité primaire de l'ouvrant, comprend des tronçons découpés dans le joint venu d'extrusion avec le joint élémentaire (2) de plus petite longueur et réunis par des parties (15, 16) moulées, aptes à former avec ces tronçons un anneau fermé présentant la longueur désirée pour le joint, lorsqu'il est en position d'utilisation sur l'ouvrant.

4. Joint selon la revendication 3, destiné à équiper une porte (4) de véhicule automobile, **caractérisé en ce que** les parties moulées (15, 16) constituent des parties du joint (3) destinées à être situées dans certains angles de la porte (4) et **en ce que** ces parties (15, 16) ont une forme adaptée au style des parties correspondantes de cette porte.

5. Joint selon l'une des revendications 1 à 4, **caractérisé en ce que** les parties (5, 6) de fixation des deux joints (2, 3) sur l'ouvrant forment, lorsqu'elles sont attenantes, une structure à section transversale en U, dont chacune des ailes et une partie attenante de la base constituent respectivement les dites parties de fixation (5, 6).

6. Joint selon la revendication 5, **caractérisé en ce que** les parties correspondant aux ailes du U comprennent chacune une armature (9, 10) métallique ou plastique.

7. Procédé de fabrication d'un joint double selon l'une des revendications 1 à 6, **caractérisé en ce que** :
- on réalise par une unique opération d'extrusion une ébauche des deux joints élémentaires (2, 3) dans laquelle ceux-ci sont attenants latéralement ;
- consécutivement ou postérieurement à la réalisation de cette ébauche, on sépare les deux joints élémentaires (2, 3) sur une partie de leur longueur ;
- on applique ensuite à chacun des deux joints (2, 3) des opérations visant à adapter leur longueur à celle du trajet fermé qu'ils doivent occuper respectivement sur l'ouvrant (4) et éventuellement à fermer les anneaux correspondant à ces trajets.

8. Procédé selon la revendication 7, **caractérisé en ce qu'**après la phase d'extrusion des deux joints (2, 3) et de séparation de ceux-ci suivant une partie de leur longueur, le joint élémentaire (2) de plus petite longueur est éventuellement mis par découpe à la longueur désirée et ses extrémités sont réunies par collage ou moulage.

9. Procédé selon l'une des revendications 7 et 8, **caractérisé en ce qu'**après la phase d'extrusion des deux joints (2, 3) et la séparation de ceux-ci suivant une partie de leur longueur, le joint élémentaire (3) de plus grande longueur est découpé en tronçons qui sont réunis par moulage de parties (15, 16), dont la forme et les dimensions sont telles qu'avec les tronçons qu'elles réunissent, elles forment un profil en anneau fermé de la longueur désirée.

10. Ouvrant, notamment porte de véhicule automobile, équipé d'un joint double d'étanchéité selon l'une des revendications 1 à 6.
